(19) Europäisches Patentamt
European Patent Office
Office européen des brevets

(11) **EP 2 718 762 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(51) Int Cl.:
**G02B 21/06** *(2006.01)*    **G02B 21/36** *(2006.01)*
**G02B 27/58** *(2006.01)*    **G02B 21/00** *(2006.01)*
**G01N 21/64** *(2006.01)*

(21) Anmeldenummer: **12722391.5**

(22) Anmeldetag: **22.05.2012**

(86) Internationale Anmeldenummer:
**PCT/EP2012/059466**

(87) Internationale Veröffentlichungsnummer:
**WO 2012/168065 (13.12.2012 Gazette 2012/50)**

(54) **HOCHAUFLÖSENDE LUMINESZENZMIKROSKOPIE**

HIGH-RESOLUTION LUMINESCENCE MICROSCOPY

MICROSCOPIE À LUMINESCENCE À HAUTE RÉSOLUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2011 DE 102011077269**

(43) Veröffentlichungstag der Anmeldung:
**16.04.2014 Patentblatt 2014/16**

(73) Patentinhaber: **Carl Zeiss Microscopy GmbH 07745 Jena (DE)**

(72) Erfinder:
• **KLEPPE, Ingo**
**07749 Jena (DE)**
• **NOVIKAU, Yauheni**
**07743 Jena (DE)**

(74) Vertreter: **Hampe, Holger**
**C/o Carl Zeiss AG**
**Standort Jena**
**Carl-Zeiss-Promenade 10**
**07745 Jena (DE)**

(56) Entgegenhaltungen:
**WO-A1-2010/141608        WO-A1-2011/135049**
**DE-U1-212009 000 043**

• **STEFAN W HELL: "Microscopy and its focal switch", NATURE METHODS, Bd. 6, Nr. 1, 1. Januar 2009 (2009-01-01), Seiten 24-32, XP55033770, ISSN: 1548-7091, DOI: 10.1038/nmeth.1291**
• **THOMAS DERTINGER ET AL: "Achieving increased resolution and more pixels with Superresolution Optical Fluctuation Imaging (SOFI)", OPTICS EXPRESS, vol. 18, no. 18, 30 August 2010 (2010-08-30), page 18875, XP055010427, ISSN: 1094-4087, DOI: 10.1364/OE.18.018875**

**Beschreibung**

Die Erfindung bezieht sich auf ein Mikroskopieverfahren bzw. ein Mikroskop zum Erzeugen eines hochaufgelösten Bildes einer lumineszierenden Probe.

Die Untersuchung von Proben mittels Mikroskopie ist ein weites technisches Gebiet, für das es vielfältige technische Lösungen gibt. Ausgehend von der klassischen Lichtmikroskopie haben sich verschiedenste Mikroskopieverfahren entwickelt.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung beleuchtet und das dadurch angeregte Lumineszenzlicht mit geeigneten Detektoren erfaßt. Üblicherweise ist dazu im Lichtmikroskop ein dichroitischer Strahlteiler in Kombination mit Blockfiltern vorgesehen, die die Fluoreszenzstrahlung von der Anregungsstrahlung abspalten und eine getrennte Beobachtung ermöglichen. Durch dieses Vorgehen ist die Darstellung einzelner, verschieden gefärbter Zellteile im Lichtmikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Markierungsstoffzugabe lumineszieren.

Lumineszenz wird hier, wie allgemein üblich, als Oberbegriff für Phosphoreszenz und Fluoreszenz verstanden, erfaßt also beide Prozesse.

Weiter ist es zur Probenuntersuchung bekannt, Laser-Scanning-Mikroskopie (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene wiedergibt, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe einer geeigneten Datenverarbeitungseinrichtung ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Für Auflösungen jenseits der Beugungsgrenze, die durch die physikalischen Gesetze gegeben ist, wurden in der letzten Zeit verschiedene Ansätze entwickelt. Diese Mikroskopieverfahren zeichnen sich dadurch aus, daß sie im Vergleich zum klassischen Mikroskop dem Anwender eine höhere laterale und/oder axiale optische Auflösung zur Verfügung stellen. In dieser Beschreibung werden solche Mikroskopieverfahren als hochauflösende Mikroskopieverfahren bezeichnet, da sie eine Auflösung jenseits der optischen Beugungsgrenze erreichen. Beugungsbegrenzte Mikroskope werden hingegen als klassische Mikroskope bezeichnet. Sie realisieren bekannte optische Weitfeldmikroskopie oder Laser-Scanning-Mikroskopie.

Ein hochauflösendes Mikroskopieverfahren ist in der EP 1157297 B1 angesprochen. Dabei werden mittels strukturierter Beleuchtung nichtlineare Prozesse ausgenützt. Als Nichtlinearität dient die Sättigung der Fluoreszenz. Durch eine strukturierte Beleuchtung erfolgt eine Verschiebung des Objektraumspektrums relativ zur Übertragungsfunktion des optischen Systems. Konkret bedeutet die Verschiebung des Spektrums, daß Objektraumfrequenzen V0 bei einer Raumfrequenz V0 - Vm, wobei Vm die Frequenz der strukturierten Beleuchtung ist, übertragen werden. Bei gegebener, durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert eine Fourierfilterung als Rekonstruktionsalgorithmus zur Bilderzeugung und die Verwertung mehrerer Aufnahmen für ein Bild. Die bezüglich der entsprechenden Beschreibung des auflösenden Mikroskopieverfahrens ebenfalls voll einbezogene EP 1157297 B1 verwendet also eine strukturierte Weitfeldbeleuchtung der Probe, beispielsweise durch ein Amplituden/PhasenGitter. Fluoreszenz in der Probe wird ebenfalls weitfelddetektiert. Das Gitter wird nun in mindestens drei verschiedene Drehlagen gebraucht, z. B. 0°, 120° und 240°, und in jeder Drehlage wird das Gitter in drei oder mehr verschiedene Positionen verschoben. Für die jeweils drei Verschiebungen der drei Drehlagen (insgesamt also mindestens 9 Beleuchtungszustände) wird die Probe weitfelddetektiert. Weiter hat das Gitter Frequenzen möglichst nahe der Grenzfrequenz, zu deren Übertragung die verwendete optische Anordnung in der Lage ist. Unter Verwendung der Fourierfilterung erfolgt dann die erwähnte Verschiebung, wobei insbesondere die 0. und +/- 1. Beugungsordnung in den Bildern ausgewertet wird. Dieses Mikroskopieverfahren wird auch als SIM-Verfahren bezeichnet.

Eine Steigerung der Auflösung erhält man bei diesem Prinzip, wenn die Strukturierung (z.B. durch ein Gitter) so intensiv ist, daß die Fluoreszenz der Probe in den hellen Bereich eine Sättigung erreicht. Dann hat die strukturierte Beleuchtung der Probe auf der Probe keine Sinusverteilung mehr, sondern aufgrund der Sättigungseffekte noch höhere harmonische jenseits der optischen Grenzfrequenz. Diese Weiterbildung des SIM-Verfahrens wird auch als saturated pattern excitation microscopy (SPEM) bezeichnet.

Eine Weiterbildung des SIM-Verfahrens kann auch mit einer linienförmigen Beleuchtung erreicht werden, die senkrecht zur Gitterrichtung liegt. Man hat dann eine Linienbeleuchtung, wobei längs der Linie sich die Gitterstruktur wiederfindet. Die Linien der Beleuchtung ist also ihrerseits durch das Gitter strukturiert. Die linienförmige Beleuchtung erlaubt eine konfokale Schlitzdetektion und damit nochmals eine Auflösungssteigerung. Dieses Verfahren wird auch als SLIM abgekürzt.

Die Veröffentlichung C. Müller und J. Enderlein, "Image scanning microscopy", Physical Review Letters, 104, 198101 (2010) greift das SIM-Prinzip auf, verwendet allerdings ein Abscannen der Probe mit einer konfokalen Beleuchtung und Detektion mit nachfolgender Fourierfilterung. Dieses Prinzip wird als ISM bezeichnet. Bei ihm liegen nicht neun Orientierungen einer strukturierten Beleuchtung vor, sondern jede Scan-Lage, d. h. jeder Rasterzustand beim Abrastern des Bildes, entspricht einem Beleuchtungszustand, und die strukturierte Beleuchtung ist eine Spotbeleuchtung des Probe.

Aus der Veröffentlichung T. Dertinger, et al., "Fast, background-free, 3D super-resolution optical fluctuation imaging (SOFI)", PNAS (2009), S. 22287-22292 sowie "Achieving increased resolution and more pixels with Superresolution Optical Fluctuation Imaging (SOFI)", Opt. Express, 30.08.2010, 18(18): 18875-85, doi: 10.1364/IE.18.018875 und S. Geissbuehler et al., "Comparison between SOFI and STORM", Biomed. Opt. Express 2, 408-420 (2011) ist ein weiteres hochauflösendes Verfahren der Lumineszenzmikroskopie bekannt. Dieses Verfahren nutzt die Blinkeigenschaften eines Fluorophors. Blinken die Fluorophore einer Probe statistisch unabhängig voneinander, kann eine Abbildung der Probe durch geeignete Filterung mit einer sogenannten Kumulantenfunktion eine erhebliche Auflösungserhöhung über die physikalisch vorgegebene optische Auflösungsgrenze hinaus erreicht werden. Ein Beispiel für eine solche Kumulantenfunktion ist beispielsweise die Autokorrelationsfunktion zweiter Ordnung. Zur Erzeugung eines hochaufgelösten Bildes wird dabei eine Folge von Einzelbildern aufgenommen und dann mit der Kumulantenfunktion zu einem Einzelbild vereinigt, das dann die höhere Auflösung hat. Dieses Verfahren wird in Abkürzung des Begriffes "Super-Resolution Optical Fluctuation Imaging" als SOFI-Verfahren bezeichnet.

Aus der DE 21 2009 000 043 U1 ist eine Vorrichtung zum Erhalten einer unterhalb einer Auflösungsgrenze liegenden, räumlichen Information einer Probe bekannt. Die Probe ist mit wenigstens einer Art einer fluoreszierenden Markierung markiert, wobei die unterhalb der Auflösungsgrenze liegende, räumliche Information Lokalisierungsinformation über die Positionen von fluoreszierenden Molekülen der wenigstens einen Art der fluoreszierenden Markierung in wenigstens einer räumlichen Richtung. Die Vorrichtung umfasst ein Fluoreszenzlokalisierungsmikroskop zum Erhalten von Lokalisierungsbilddaten welches eine Beleuchtungseinrichtung umfasst, welche ausgelegt ist, eine interessierende Region der Probe mit einem Beleuchtungslicht, welches eine Intensität in dem Bereich von etwa 1 kW/cm2 bis 1 MW/cm2 aufweist, zu beleuchten. Die Vorrichtung umfasst weiterhin eine Detektionseinrichtung, welche ausgelegt ist, wenigstens einen Teil des Fluoreszenzlichts, welches durch wenigstens einen Teil der fluoreszierenden Moleküle der wenigstens einen Art der fluoreszierenden Markierung bei der Beleuchtung emittiert wird, zu detektieren, wodurch ein Bild der interessierenden Region erhalten wird. Die Lokalisierungsbilddaten umfassen eine Serie von Bildern der interessierenden Region. Das Fluoreszenzlokalisierungsmikroskop ist ausgelegt, die Schritte eines Beleuchtens und Detektierens des emittierten Fluoreszenzlichts mehrfach zu wiederholen, wodurch die Serie von Bildern erhalten wird, wobei jedes Bild bei einem unterschiedlichen Zeitschritt aufgenommen wird; und wobei die Vorrichtung ferner eine Bearbeitungseinheit zum Bearbeiten der erhaltenen Lokalisierungsbilddaten umfasst, um dadurch die Lokalisierungsinformation betreffend die Positionen von fluoreszierenden Molekülen der wenigstens einen Art der fluoreszierenden Markierung in wenigstens einer räumlichen Richtung zu erhalten. Das Bearbeiten umfasst ein Bestimmen in jedem der detektierten Bilder der Serie der Positionen der Schwerpunkte der detektierten Fluoreszenzemissionsverteilungen von den einzelnen fluoreszierenden Molekülen der einen oder mehreren fluoreszierenden Markierung(en) in wenigstens einer räumlichen Richtung.

Ein Verfahren zur Analyse eines Sichtfeld mit unabhängig blinkenden Objekten ist in der WO 2010/141068 A1 beschrieben. Das Verfahren umfasst die Schritte des

Auswählens einer Probe oder eines Beobachtungsbildes mit unabhängig blinkenden Objekten, des Erfassens einer zeitlichen Folge von Bildern des Objekts und Bereitstellen eines x, y, t-Stapels von Bildelementen. Für jedes Bildelement wird eine Zeittrajektorie extrahiert und eine Autokorrleationsfunktion oder eine Autokumulantenfunktion mindestens zweiter Ordung jeder Zeittrajektorie berechnet. Ein hochaufgelöstes Bild mit reduzierten Hintergrundrauschen wird generiert.

Im Stand der Technik ist es weiter bekannt, mehrere hochauflösende Mikroskopieverfahren zu kombinieren. So beschreibt beispielsweise die DE 102008054317 A1 die Kombination diverser hochauflösender Mikroskopieverfahren, mit dem Ziel für einzelne Probenbereiche jeweils das unter den Gesichtspunkten Auflösung und Meßgeschwindigkeit optimale Verfahren einsetzen zu können. Die Erfindung ist in dem angehängten Anspruchssatz definiert. Der Erfindung liegt die Aufgabe zugrunde, ein Mikroskopieverfahren bzw. ein Mikroskop zu schaffen, das eine gesteigerte Auflösung erreicht.

Diese Aufgabe wird gelöst mit einem Mikroskopieverfahren zum Erzeugen eines hochaufgelösten Bildes einer Probe, wobei das Verfahren folgende Schritte aufweist: a) die Probe mit einem Marker versehen wird, der nach Anregung statistisch blinkend Lumineszenzstrahlung abgibt, oder eine Probe verwendet wird, die nach Anregung lokal verteilt, statistisch blinkend Lumineszenzstrahlung abgibt, b) die Probe durch strukturierte Beleuchtung zur Lumineszenz angeregt wird, wobei die Probe wiederholt in verschiedenen Beleuchtungszuständen der strukturierten Beleuchtung beleuchtet wird, c) die lumineszierende Probe in jedem der unterschiedlichen Beleuchtungszustände wiederholt auf einen Detektor abgebildet wird, so daß für jeden der unterschiedlichen Beleuchtungszustände eine Bildfolge erhalten wird, d) aus jeder Bildfolge mittels einer Kumulantenfunktion, welche durch das Blinken verursachte Intensitätsfluktuationen in der Bildfolge auswertet, ein Rohbild, das eine über die optische Auflösung der Abbildung hinaus gesteigerte Ortsauflösung aufweist, erzeugt wird, so daß für jeden der unterschiedlichen Beleuchtungszustände ein hochaufgelöstes Rohbild erhalten wird, e) aus den erhaltenden Rohbildern durch eine eine Fourierfilterung umfassende rechnerische Bearbeitung das hochaufgelöste Bild, das eine gegenüber den Einzelbildern gesteigerte Ortsauflösung aufweist, erzeugt wird.

Die Aufgabe wird weiter gelöst mit einem Mikroskopieverfahren zum Erzeugen eines hochaufgelösten Bildes einer Probe, wobei das Verfahren folgende Schritte aufweist: a) die Probe mit einem Marker versehen wird, der nach Anregung statistisch blinkend Lumineszenzstrahlung abgibt, oder eine Probe verwendet wird, die nach Anregung lokal verteilt, statistisch blinkend Lumineszenzstrahlung abgibt, b) die Probe durch strukturierte Beleuchtung zur Lumineszenz angeregt wird, wobei die Probe wiederholt mit einem Satz von verschiedenen Beleuchtungszuständen der strukturierten Beleuchtung beleuchtet wird, c) die lumineszierende Probe in jedem Satz und dort in jedem der unterschiedlichen Beleuchtungszustände auf einen Detektor abgebildet wird, so daß eine Folge von Sätzen, die jeweils pro unterschiedlichem Beleuchtungszustand ein Bild umfassen, erhalten wird, d) aus jedem Satz durch eine eine Fourierfilterung umfassende rechnerische Bearbeitung ein Rohbild mit über die optische Auflösung der Abbildung hinaus gesteigerter Ortsauflösung erzeugt wird, so daß eine Folge von Rohbildern erhalten wird, e) aus der Folge von Rohbildern mittels einer Kumulantenfunktion, welche durch das Blinken verursachte Intensitätsfluktuationen in der Folge auswertet, das hochaufgelöste Bild, das eine gegenüber den Rohbildern gesteigerte Ortsauflösung aufweist, erzeugt wird.

Die Aufgabe wird schließlich ebenfalls gelöst mit einem Mikroskop zum Erzeugen eines hochaufgelösten Bildes einer Probe, die Probe mit einem Marker versehen ist, der nach Anregung statistisch blinkend Lumineszenzstrahlung abgibt, oder einer Probe, die nach Anregung lokal verteilt, statistisch blinkend Lumineszenzstrahlung abgibt, wobei das Mikroskop aufweist: einen Detektionsstrahlengang und einen Beleuchtungsstrahlengang, wobei der Detektionsstrahlengang die Probe Detektor abbildet und der Beleuchtungsstrahlengang die Probe mit durch strukturierte Beleuchtung zur Anregung von Lumineszenz beleuchtet, wobei der Beleuchtungsstrahlengang eine Einrichtung zu Realisierung von verschiedenen Beleuchtungszuständen aufweist, eine Rechen- und Steuereinrichtung, die das Mikroskop so steuert, daß die Probe wiederholt den verschiedenen Beleuchtungszuständen der strukturierten Beleuchtung beleuchtet ist, die lumineszierende Probe in jedem der unterschiedlichen Beleuchtungszustände wiederholt auf einen Detektor abgebildet ist, so daß für jeden der unterschiedlichen Beleuchtungszustände eine Bildfolge erhalten ist, die Rechen- und Steuereinrichtung aus jeder Bildfolge mittels einer Kumulantenfunktion, welche durch das Blinken verursachte Intensitätsfluktuationen in der Bildfolge auswertet, ein Rohbild, das eine über die optische Auflösung der Abbildung hinaus gesteigerte Ortsauflösung aufweist, erzeugt, so daß für jeden der unterschiedlichen Beleuchtungszustände ein hochaufgelöstes Rohbild erhalten ist, die Rechen- und Steuereinrichtung aus den erhaltenden Rohbildern durch eine eine Fourierfilterung umfassende rechnerische Bearbeitung das hochaufgelöste Bild, das eine gegenüber den Einzelbildern gesteigerte Ortsauflösung aufweist, erzeugt.

Die Aufgabe wird schließlich auch gelöst mit einem Mikroskop zum Erzeugen eines hochaufgelösten Bildes einer Probe, die Probe mit einem Marker versehen ist, der nach Anregung statistisch blinkend Lumineszenzstrahlung abgibt, oder einer Probe, die nach Anregung lokal verteilt, statistisch blinkend Lumineszenzstrahlung abgibt, wobei das Mikroskop aufweist: einen Detektionsstrahlengang und einen Beleuchtungsstrahlengang, wobei der Detektionsstrahlengang die Probe Detektor abbildet und der Beleuchtungsstrahlengang die Probe mit durch strukturierte Beleuchtung zur Anregung von Lumineszenz beleuchtet, wobei der Beleuchtungsstrahlengang eine Einrichtung zu Realisierung von verschiedenen Beleuchtungszuständen aufweist, eine Rechen- und Steuereinrichtung, die das Mikroskop so steuert, daß die Probe wiederholt mit einem Satz von verschiedenen Beleuchtungszuständen der strukturierten Beleuchtung beleuchtet ist, und die lumineszierende Probe in jedem Satz und dort in jedem der unterschiedlichen Beleuchtungszustände auf den Detektor abgebildet ist, so daß eine Folge von Sätzen, die jeweils pro unterschiedlichem Beleuchtungszustand ein Bild umfassen, erhalten ist, die Rechen- und Steuereinrichtung aus jedem Satz durch eine eine Fourierfilterung umfassende rechnerische Bearbeitung ein Rohbild mit über die optische Auflösung der Abbildung hinaus gesteigerter Ortsauflösung erzeugt, so daß eine Folge von Rohbildern erhalten ist, die Rechen- und Steuereinrichtung aus der Folge von Rohbildern mittels einer Kumulantenfunktion, welche durch das Blinken verursachte Intensitätsfluktuationen in der Folge auswertet, das hochaufgelöste Bild, das eine gegenüber den Rohbildern gesteigerte Ortsauflösung aufweist, erzeugt.

Erfindungsgemäß werden Elemente des SIM-Prinzips mit Elementen des SOFI-Prinzips kombiniert. Durch eine geschickte Kombination wird dabei eine Auflösungssteigerung erreicht, die besser ist als der Faktor $\sqrt{2}$, der sich bei Kombination der einzelnen hochaufgelösten Bilder ergäbe. Das Bild ist höher aufgelöst, als es die Mittelung von Bildern der einzelnen Verfahrensmerkmale für sich bei gleichem Aufwand erlauben würde.

Bei Ausnutzung des SIM-Prinzips wird die Probe in mindestens neun verschiedenen Beleuchtungszuständen der strukturierten Beleuchtung beleuchtet, indem mindestens drei Drehlagen und pro Drehlage mindestens drei Verschiebelagen der strukturierten Beleuchtung realisiert werden. Die lumineszierende Probe wird in jedem der unterschiedlichen Beleuchtungszustände wiederholt auf einen Pixel aufweisenden Flächendetektor abgebildet. Die durch das Blinken verursachte Intensitätsfluktuationen in der Folge werden für jedes Pixel ausgewertet.

Bei Ausnutzung des ISM-Prinzips sind die Beleuchtungszustände die unterschiedlichen Scan-Stellungen, die beim Abrastern auftreten. Anders als bei einem herkömmlichen LSM haben die Bilder der Probe in den unterschiedlichen Beleuchtungszuständen eine Auflösung, die die Struktur der fluoreszierenden Elemente zeigt. Dies kann z. B. durch eine entsprechend auflösende Weitfelddetektion erfolgen.

Die bei den verschiedenen Beleuchtungszuständen gewonnenen Bilder der fluoreszierenden Probe stellen dann einen Satz an Bildern dar. Das Gewinnen solcher Sätze wird wiederholt, um eine Folge von Sätzen zu erhalten. Aus dieser Folge von Sätzen kann nun auf zweierlei Weise ein hochaufgelöstes Bild erhalten werden:

1. Jeder Satz kann mittels der für SIM bekannten rechnerischen Bearbeitung unter Verwendung einer Fourierfilterung in ein hochaufgelöstes Rohbild umgewandelt werden. Man erhält dann auf diese Weise eine Folge von Rohbildern. Diese Folge von Rohbildern wird dann unter Verwendung einer Kumulantenfunktion gemäß dem SOFI-Ansatz zu einem noch weiter hochaufgelösten, endgültigen Bild umgerechnet. Die Auflösung des endgültigen Bildes ist dabei gegenüber der des Rohbildes deutlich gesteigert, insbesondere erhält man im Ergebnis eine Auflösung, die deutlich besser wäre, als bei einer simplen Aggregation von Bildern, die mit den Prinzipen SIM bzw. SOFI gewonnen wurden.

2. Die Folge von Sätzen, die jeweils ein Bild der Probe in den verschiedenen Beleuchtungszuständen umfassen, können aber auch zuerst für jeden Beleuchtungszustand mittels des SOFI-Prinzipes unter Verwendung der Kumulantenfunktion in einen Satz von Rohbildern umgerechnet werden, der für jeden Beleuchtungszustand ein Rohbild enthält. Dieser Satz aus Rohbildern kann dann mittels dem SIM-gemäßen, Ansatz in ein endgültiges, ebenfalls weiter in seiner Auflösung gesteigertes Bild umgesetzt werden.

Da die Erfindung Merkmale des SIM-Prinzipes umfaßt, sein folgende Druckschriften, die sich mit Details des SIM-Prinzipes befassen, vollumfänglich in ihrer Offenbarung relevant: EP 1157297 B1, DE 19908883 A1, M. Gustafsson, "Nonlinear structured-illumination microscopy: wide-field fluorescence imaging with theoretically unlimited resolution", Proc Natl Acad Sci USA, 13.09.2005, 102(37): 13081-6, Epub 2.09.2005; R. Heintzmann und C. Cremer, (1998), Proc. SPIE Int. Soc. Opt. Eng. 3568, S. 185-195.

Da die Erfindung weiterhin Merkmale des SOFI-Prinzipes verwendet, seien folgende, für dieses Prinzip relevante Veröffentlichungen ebenfalls relevant: T. Dertinger et al., "Fast,background-free, 3D super-resolution optical fluctuation imaging (SOFI)", PNAS (2009), S. 22287-22292 samt zugehöriger "Supporting Information"; "Achieving increased resolution and more pixels with Superresolution Optical Fluctuation Imaging (SOFI)", Opt. Express, 30.08.2010, 18(18): 18875-85, doi: 10.1364/IE.18.018875 und S. Geissbuehler et al., "Comparison between SOFI and STORM", Biomed. Opt. Express 2, S. 408-420 (2011).

Erfindungsgemäß wird die Probe mit einem Marker versehen, der nach geeigneter Anregung statistisch blinkend Lumineszenzstrahlung abgibt. Unter Marker werden dabei übliche Label oder sonstige Substanzen versehen, die sich an darzustellenden Strukturen der Probe anlagern. Alternativ kann eine bereits entsprechend lumineszierende Probe verwendet werden. Letztlich wird also eine Probe mikroskopisch abgebildet, die Strukturen aufweist, welche statistisch blinkend Lumineszenzstrahlung abgeben. "Statistisch blinkend" heißt dabei, daß die einzelnen Marker oder Probenmoleküle jeweils für sich unabhängig von benachbarten Markern oder Molekülen ständig zwischen zwei Lumineszenzstrahlungszuständen wechseln. Dies können im einfachsten Fall ein Zustand, in dem Lumineszenzstrahlung abgegeben wird, und ein Zustand sein, in dem keine Lumineszenzstrahlung abgegeben wird. Es ist aber auch der Wechsel zwischen der Abgabe zweier sich unterscheidender Arten von Lumineszenzstrahlung möglich, beispielsweise ein Wellenlängenwechsel, Polarisationswechsel etc. Diese Eigenschaft der Probe ist für die Anwendung der Elemente aus dem SOFI-Prinzip notwendig, da nur dann die Kumulantenfunktion es erlaubt, eine Bildfolge in ein einzelnen hochaufgelöstes Bild umzusetzen.

Verwendet man die oben erwähnte zweite Variante, bei der eine Abfolge von Sätzen von Bildern der Probe in unterschiedlichen Beleuchtungszuständen mittels Fourier-Transformation in eine Abfolge aus höher aufgelösten Rohbildern umgerechnet wird, sollte sich das Blinkverhalten innerhalb eines Satzes möglichst nicht ändern. Dies führt dazu, daß die Zeitdauer, in der ein Satz aufgenommen wird, gemessen an der mittleren Blinkfrequenz kurz sein sollte, also nicht länger als der Kehrwert der Blinkfrequenz oder besonders bevorzugt einem Bruchteil des Kehrwertes betragen sollte. Dies entspricht dem Merkmal, daß die Satzrate kleiner, bevorzugt 10x kleiner, als die mittlere Bildfrequenz ist. Dann ist gewährleistet, daß innerhalb eines Satzes sich der Blinkzustand der beteiligten Moleküle nicht ändert. Für die dann an der Folge von Rohbildern ausgeführten SOFI-Bearbeitung ist dies von Vorteil.

Es ist deshalb in einer Weiterbildung der Erfindung bevorzugt, daß die Bildaufnahmegeschwindigkeit und die Blinkrate der verwendeten Moleküle geeignet aneinander angepaßt werden. Dies kann zum einen durch Auswahl geeigneter Marker- oder Probenmoleküle erreicht werden. Natürlich ist es auch möglich, durch geeignete Beeinflussung die Blinkrate der Moleküle anzupassen. Je nach Molekül kommen hier verschiedene physikalische Einflußgrößen in Frage, insbesondere Temperatur, Wellenlänge der als Anregungsstrahlung wirkenden Beleuchtungsstrahlung, Intensität der als Anregungsstrahlung wirkenden Beleuchtungsstrahlung, etc. Auch sind chemische Beeinflussungen möglich, wie z. B. von Geissbuehler et al. erläutert. Weiter kann man für eine gegebene Blinkrate die Bildaufnahmedauer bzw. Satzrate (Rate von Sätzen mit Bildern) entsprechend anpassen, um den oben erwähnten Zustand zu erreichen.

Soweit die Erfindung vorstehend oder nachfolgend unter Bezugnahme auf Verfahrensmerkmale beschrieben ist, soll dies gleichermaßen auch für die Beschreibung eines entsprechenden Mikroskops aus den oben erwähnten Merkmalen gelten. Wesentlich für das Mikroskop ist, daß seine Rechen- und Steuereinrichtung einen entsprechenden Betrieb des Mikroskops zur Realisierung der geschilderten Verfahrensmerkmale gewährleistet. Die Rechen- und Steuereinrichtung ist dazu geeignet ausgebildet, beispielsweise durch eine passende Programmierung. Umgekehrtes gilt natürlich für den Fall, daß einzelne Merkmale lediglich anhand des Mikroskops beschrieben sein sollten. Diese Merkmale gelten dann analog für die beschriebenen Mikroskopieverfahren.

Für SIM, SLIM und SPEM ist eine Rotation der strukturierten Beleuchtung erforderlich, wie bereits geschildert wurde. Diese läßt sich besonders einfach realisieren, wenn dem Gitter, welches zur Realisierung dieser Mikroskopieverfahren im gemeinsamen Abschnitt von zweiten und dritten Beleuchtungsstrahlengang liegt ein Bildfeldrotator nachgeordnet ist. Dieser kann beispielsweise durch ein Abbe-König-Prisma realisiert sein. Dieser nachgeordnete Bildfeldrotator ist besonders vorteilhaft für das SLIM-Prinzip, da dann die senkrechte Lage von Gitter und linienförmiger Beleuchtung nur einmal eingestellt werden muß und eine Nachführung, die ansonsten bei einer Gitterrotation erforderlich wäre, entfällt.

Nachfolgend wird die Erfindung beispielsweise anhand der beigefügten Zeichnungen, die auch erfindungswesentliche Merkmale offenbaren, noch näher erläutert. Es zeigen:

Fig. 1     zeigt eine schematische Darstellung eines Kombinationsmikroskops,

Fig. 2     eine Schemadarstellung zur Verdeutlichung der Erzeugung eines hochaufgelösten Bildes aus mehreren Weitfeldbildern einer Probe, die unter unterschiedlichen Beleuchtungszuständen erhalten wurden,

Fig. 3     eine Schemadarstellung zur Veranschaulichung der Erzeugung eines hochaufgelösten Bildes aus einer Bildfolge der Probe in unterschiedlichen Blinkzuständen unter Kombination der Prinzipien gemäß Fig. 2 und Fig. 3,

Fig.4     eine erste Ausführungsform eines Verfahrens zur Erzeugung eines nochmals höher aufgelösten Bildes unter Kombination der Prinzipien gemäß Fig. 2 und 3 und

Fig. 5     eine zweite Ausführungsform eines Verfahrens zur Erzeugung eines ebenfalls nochmals höher aufgelösten Bildes ebenfalls unter Kombination der Prinzipien gemäß Fig. 2 und 3.

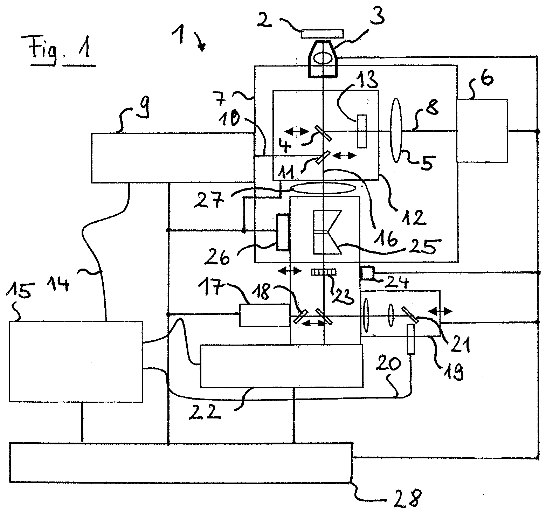

In Fig. 1 ist ein Mikroskop 1 dargestellt, das klassische Mikroskopieverfahren, d. h. Mikroskopieverfahren deren Auflösung beugungsbegrenzt ist, mit hochauflösenden Mikroskopieverfahren simultan ausführen kann, d. h. mit Mikroskopieverfahren deren Auflösung über die Beugungsgrenze hinaus gesteigert ist.

Das Mikroskop 1 ist auf Basis eines herkömmlichen Laser-Scanning-Mikroskops aufgebaut und erfaßt eine Probe 2. Dazu weist es ein Objektiv 3 auf, durch das die Strahlung für alle Mikroskopieverfahren läuft.

Das Objektiv 3 bildet über einen Strahlteiler 4 die Probe zusammen mit einer Tubuslinse 5 auf einen CCD-Detektor 6 ab, der im Beispiel ein allgemein möglichen Flächendetektor ist. Insofern verfügt das Mikroskop 1 über ein herkömmliches Lichtmikroskopmodul 7 und der Strahlengang von der Probe 2 durch das Objektiv 3 und die Tubuslinse 5 zum CCD-Detektor 6 entspricht einem herkömmlichen Weitfeld-Detektionsstrahlengang 8. Der Strahlteiler 4 ist, wie durch den Doppelpfeil in Fig. 1 angedeutet, austauschbar, um zwischen Strahlteilern mit verschiedenen dichroitischen Eigenschaften bzw. achromatischen Strahlteilern gemäß US 2008/0088920 wechseln zu können.

In den Strahlengang zum Objektiv 3 ist weiter ein Laser-Scanning-Modul 9 angebunden, dessen LSM-Beleuchtungs- und Detektionsstrahlengang über einen Schaltspiegel 11, der ebenfalls Strahlteilerfunktionen hat, in den Strahlengang zum Objektiv 3 eingekoppelt ist. Der Strahlengang vom Schaltspiegel 11 zum Objektiv 3 durch den Strahlteiler 4 ist also ein Strahlengang, in dem Beleuchtungsstrahlengang und Detektionsstrahlengang vereint sind. Dies gilt sowohl hinsichtlich des Laser-Scanning-Moduls 9 also auch hinsichtlich des Weitfeld-Detektionsstrahlengangs 8, da, wie noch zu erläutern sein wird, am Schaltspiegel 11 auch Beleuchtungsstrahlung eingekoppelt wird, die zusammen mit dem Weitfeld-Detektionsstrahlengang 8, d. h. dem CCD-Detektor 6 Mikroskopieverfahren realisiert.

Der Schaltspiegel 11 und der Strahlteiler 4 sind zu einem Strahlteilermodul 12 zusammengefaßt, wodurch die Möglichkeit besteht, den Schaltspiegel 11 und den Strahlteiler 4 anwendungsabhängig zu wechseln. Dies ist auch durch Doppelpfeile veranschaulicht. Weiter im Strahlteilermodul 12 ist ein Emissionsfilter 13 vorgesehen, das im Weitfeld-Detektionsstrahlengang 8 liegt und die spektralen Anteile, welche durch den Weitfeld-Detektionsstrahlengang 8 propagieren können, geeignet filtert. Natürlich ist auch das Emissionsfilter 13 im Strahlteilermodul 12 austauschbar.

Das Laser-Scanning-Modul 9 erhält für den Betrieb erforderliche Laserstrahlung über eine Lichtleitfaser 14 von einem Lasermodul 15.

In der in Fig. 1 dargestellten Bauweise wird am Strahlteilermodul 12, genauer am Schaltspiegel 14 ein Sammel-Beleuchtungsstrahlengang 16 eingekoppelt, durch den Beleuchtungsstrahlung für verschiedene Mikroskopieverfahren läuft. In diesen Sammel-Beleuchtungsstrahlengang 16 sind verschiedene Beleuchtungsstrahlengänge einzelner Beleuchtungsmodule eingekoppelt. Beispielsweise koppelt ein Weitfeldbeleuchtungsmodul 17 über einen Schaltspiegel 18 Weitfeldbeleuchtungsstrahlung in den Sammel-Beleuchtungsstrahlengang 16, so daß über eine Tubuslinse 27 und das Objektiv 3 die Probe 2 weitfeldbeleuchtet wird. Das Weitfeldbeleuchtungsmodul kann beispielsweise eine HBO-Lappe aufweisen. Als weiteres Beleuchtungsmodul ist ein TIRF-Beleuchtungsmodul 19 vorgesehen, das bei geeigneter Stellung des Schaltspiegels 18 eine TIRF-Beleuchtung realisiert. Das TIRF-Beleuchtungsmodul 19 erhält dazu Strahlung von Lasermodul 15 über eine Lichtleitfaser 20. Das TIRF-Beleuchtungsmodul 19 weist einen Spiegel 21 auf, der längsverschieblich ist. Durch die Längsverschiebung wird der Beleuchtungsstrahl, der vom TIRF-Beleuchtungsmodul 19 abgegeben wird, senkrecht zur Hauptausbreitungsrichtung des abgegebenen Beleuchtungsstrahls verschoben, wodurch im Ergebnis am Objektiv 3 die TIRF-Beleuchtung unter einem einstellbaren Winkel zur optischen Achse des Objektivs einfällt. Auf diese Weise kann einfach der nötige Winkel der Totalreflexion am Deckglas sichergestellt werden. Natürlich sind auch andere Mittel geeignet, um diese Winkelverstellung zu bewirken.

Weiter ist an dem Sammel-Beleuchtungsstrahlengang der Beleuchtungsstrahlengang eines Manipulatormoduls 22 angekoppelt, das ebenfalls über eine nicht näher bezeichnete Lichtleitfaser Strahlung vom Lasermodul 15 erhält und eine punkt- oder linienförmige Strahlverteilung scannend über die Probe 2 führt. Das Manipulatormodul 22 entspricht also im wesentlichen dem Beleuchtungsmodul eines Laserscanningmikroskops, und demzufolge kann das Manipulatormodul 22 auch mit dem Detektor des Laser-Scanning-Moduls 9 oder der Weitfeld-Detektion des CCD-Detektors 6 kombiniert betrieben werden.

Im Sammel-Beleuchtungsstrahlengang 16 ist weiter ein Gitter 23 vorgesehen, dessen Gitterkonstante unterhalb der Grenzfrequenz liegt, die mit dem Mikroskop 1 in die Probe 2 übertragen werden kann. Das Gitter 23 ist quer zur optischen Achse des Sammel-Beleuchtungsstrahlengangs 16 verschieblich. Hierzu ist ein entsprechender Verschiebeantrieb 24 vorgesehen.

In Beleuchtungsrichtung dem Gitter nachgeordnet sitzt im Sammel-Beleuchtungsstrahlengang 16 weiter ein Bildfeldrotator 25, der von einem Rotatorantrieb 26 gedreht wird. Bei dem Bildfeldrotator kann es sich beispielsweise um ein Abbe-König-Prisma handeln.

Die Module und Antriebe sowie Detektoren des Mikroskops 1 sind alle über nicht näher bezeichnete Leitungen mit einer Steuereinrichtung 28 verbunden. Diese Verbindung kann beispielsweise über einen Daten- und Steuerbus erfolgen. Die Steuereinrichtung 28 steuert das Mikroskop 1 in verschiedene Betriebsmodi.

Das Steuergerät 28 erlaubt es somit am Mikroskop 1 klassische Mikroskopie, d. h. Weitfeldmikroskopie (WF), Laserscanningmikroskopie (LSM) und auch Fluoreszenzmikroskopie mit totaler interner Reflexion (TIRF) auszuführen. Das Mikroskop der Fig. 1 weist im wesentlichen zwei zum Laserscannerbeleuchten geeignete Module auf, nämlich das Laserscanningmodul 9 sowie das Manipulatormodul 22. Natürlich sind auch andere Kombinationen möglich. Diese Module sind über Tubuslinsen mit dem Objektiv 3 auf die Probe 2 gekoppelt. Das Manipulatormodul 22 beinhaltet lediglich den Anregungsteil eines Laserscanningmoduls, ohne Detektion. Dadurch kann die Probe punktförmig beleuchtet und der Beleuchtungsspot über die Probe 2 gerastert werden. Vorzugsweise befindet sich im Manipulatormodul 2 auch eine Umschalteinheit, z. B. eine Umschaltlinse oder Zylinderlinse, mit welcher eine Umschaltung zwischen einer punktförmigen und einer linienförmigen Beleuchtung erfolgt. Diese linienförmige Beleuchtung ist besonders dann vorteilhaft, wenn das Gitter 23, welches sich in einem Zwischenbild des Sammel-Beleuchtungsstrahlengangs 16 befindet, eingeschwenkt ist und senkrecht zur Linie der linienförmigen Beleuchtung liegt.

Alternativ zum Gitter 23 kann auch ein variabel einstellbarer Streifenmodulator oder ein DMD zur Erzeugung einer strukturierten Beleuchtung in der Probe 2 eingesetzt werden. Dann ist natürlich der Verschiebeantrieb 24 sowie die Ein-/Ausschwenkbarkeit des Gitters 23 nicht mehr erforderlich.

Der Bildfeldrotator 25 erlaubt es, die strukturierte Beleuchtung, die durch das Gitter 23 (oder die dieses ersetzende Elemente) erzeugt werden, um die optische Achse des Sammel-Beleuchtungsstrahlganges 16 zu drehen, so daß die strukturierte Beleuchtung in verschiedenen Winkeln in der Probe 2 liegt.

Zur Umschaltung zwischen einzelnen Betriebsarten werden die Schaltspiegel 18 und 11 sowie der Strahlteiler 4 geeignet eingestellt. Hierzu können in der Realisierung Klapp- oder Einschenkspiegel verwendet werden, so daß eine Umschaltung zwischen den Betriebsarten sequentiell erfolgen kann. Alternativ sind auch dichroitische Spiegel möglich, welche einen gleichzeitigen Betrieb der verschiedenen Module ermöglichen.

Der Strahlteiler 4 ist vorzugsweise als dichroitischer Strahlteiler ausgeführt, wobei die Spektraleigenschaften so einstellbar sind, daß Spektralanteile von Fluoreszenzemission von Markierungsmolekülen, die mit Hilfe des CCD-Detektors 6 detektiert werden sollen, in den Weitfeld-Detektionsstrahlengang 8 gelangen und die übrigen Spektralkomponenten möglichst transmittiert werden. Zur Erhöhung der Flexibilität bezüglich der Verwendbarkeit von Markierungsmolekülen mit verschiedenen Emissionscharakteristiken sind im Strahlteilermodul 12 mehrere verschiedene Strahlteiler 4 und Emissionsfilter 13 austauschbar angeordnet, z. B. auf einem Filterrad.

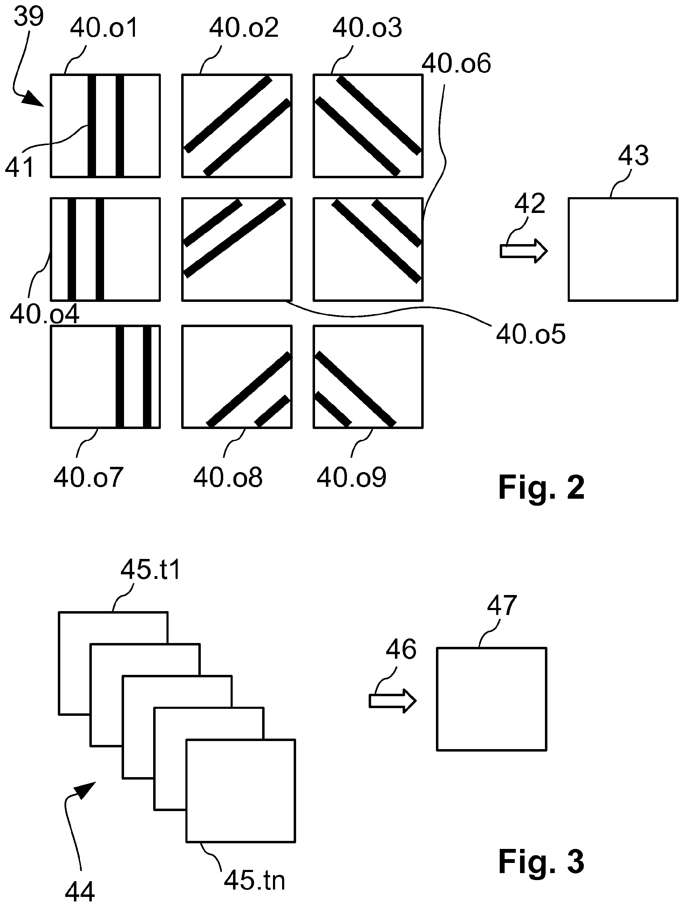

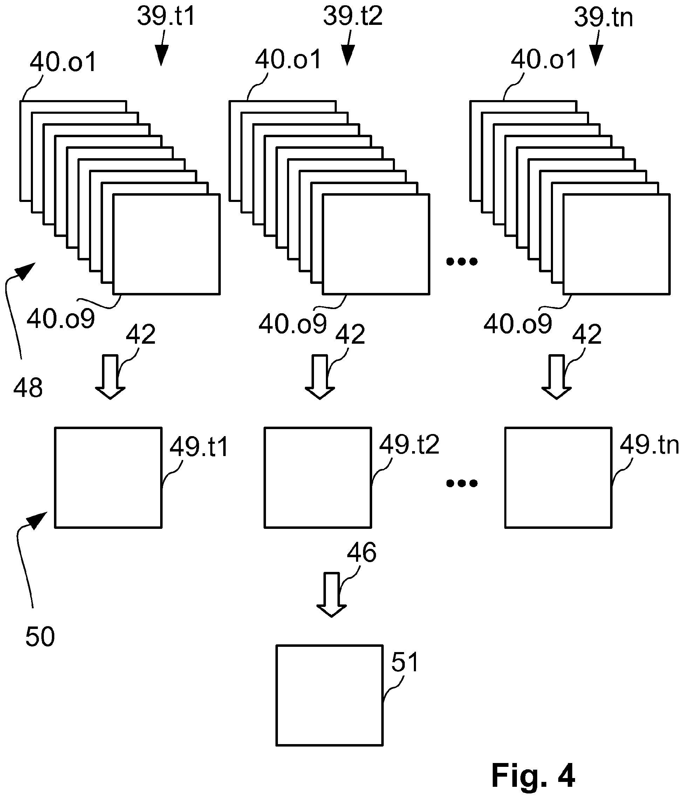

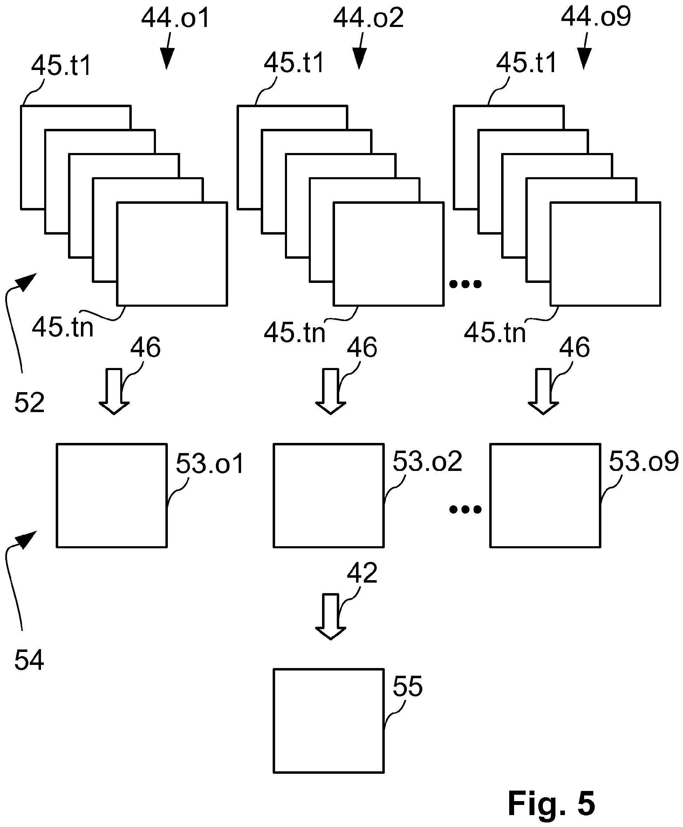

Das oben beschriebene Mikroskop dient nun dazu, ein hochaufgelöstes Mikroskopbild zu erzeugen. Dazu ist das Steuergerät 28 geeignet ausgebildet, beispielsweise durch eine geeignete Programmierung. Bevor mögliche Verfahrensabläufe anhand der Fig. 4 und 5 erläutert werden, seien zunächst anhand der Fig. 2 und 3 wesentliche Merkmale und Prinzipien erläutert, die Bestandteile der zu beschreibenden Mikroskopieverfahren sind.

Fig. 2 verdeutlicht exemplarisch das SIM-Konzept. Dazu wird die im Mikroskop 1 der Fig. 1 mikroskopierte Probe wiederholt weitfeld-abgebildet, wobei für jede Abbildung unterschiedliche Beleuchtungszustände eingestellt werden. Man erhält damit einen Satz 39 von einzelnen Bildern 40. Die Bilder 40 unterscheiden sich hinsichtlich einer Strukturierung 41 der Beleuchtung, die durch den Beleuchtungsstrahlengang 8 auf die Probe aufgebracht wird. Wie zu sehen ist, ist die Strukturierung 41 in verschiedenen Bildern 40 unterschiedlich. Insgesamt liegen, wie der in Fig. 2 in Draufsicht dargestellte Satz 39 zeigt, neun einzelne Bilder 40 vor; es gibt also neun unterschiedliche Orientierungen der Strukturierung 41. Die unterschiedlichen Strukturierungen sind in der Darstellung der Fig. 2 durch eine Anfügung ".O1" bis ".O9" an das Bezugszeichen 40 des jeweiligen Bildes verdeutlicht. Die Draufsicht auf die einzelnen Bilder 40 in Fig. 2 zeigt, daß sich die neun Orientierungen hinsichtlich einer Verschiebelage bzw. einer Drehlage der Strukturierung 40 unterscheiden. Die Anzahl von neun ist für die verwendeten Orientierungen exemplarisch. Es ist auch eine höhere Anzahl möglich, wie dies aus den im allgemeinen Teil der Beschreibung aufgelisteten Publikationen zum Prinzip SIM bekannt ist.

Die einzelnen Bilder 40 des Satzes 39 werden nacheinander aufgenommen, wobei zwischen der Aufnahme jedes Bildes 40 die Strukturierung 41 der Beleuchtung entsprechend verschoben bzw. gedreht wird.

Aus dem gesamten Satz 39 wird dann mittels einer Fourier-Transformation 42 ein hochaufgelöstes Bild 43 erzeugt. Dieses Bild 43 kann, wie nachfolgend anhand der Fig. 4 noch erläutert werden wird, als Rohbild für eine weitere hochauflösende Bearbeitung dienen.

Fig. 2 veranschaulicht also Merkmale des SIM-Prinzipes. Die Strukturierung 41 ist jedoch rein exemplarisch zu verstehen. Insbesondere muß sie keine Linienstrukturierung sein. Auch können die schematisch eingezeichneten Linien längs der Linie noch weiter strukturiert sein.

Fig. 3 zeigt schematisch ein weiteres Prinzip, das zum hochauflösenden Mikroskopieren eingesetzt wird. Gemäß diesem Prinzip wird eine Folge 44 von Bildern 45 aufgenommen, wobei, wie eingangs mit Bezug auf das SOFI-Konzept erläutert, jedes Bild 45 einen anderen Blinkzustand der Fluorophore in der Probe 2 enthält. Daß die Folge 44 eine Zeitreihe ist, wird durch die Suffixe, welche an das Bezugszeichen 45 der Bilder angefügt sind, verdeutlicht. Die einzelnen Bilder tragen die Anfügung ".t1" bis ".tn". Aus der Folge 44 wird mittels einer Bearbeitung, die eine Kumulantenfunktion 46 verwendet, wiederum ein hochaufgelöstes Rohbild 47 erzeugt. Die n Bilder 45 werden also zu einem einzigen Bild 47 umgesetzt. Dies vorausgeschickt soll nun anhand der Fig. 4 ein erstes Verfahren zur hochaufgelösten Mikroskopie erläutert werden. Dazu werden wiederholt Sätze 39 erzeugt, die jeweils aus Bildern 40.o1 bis 40.o9 bestehen. Durch diese Wiederholung liegen insgesamt n Sätze 39.t1 bis 39.tn vor. In jedem Satz sind die für das SIM-Konzept erforderlichen Orientierungen der Beleuchtungszustände vorhanden, was durch die Aufgreifung der Bezugszeichen der Fig. 2 in Fig. 4 verdeutlicht sein soll.

Nun wird durch Einsatz der Fourierfilterung 42 aus jedem Satz 49.t1 bis 49.tn eine Folge 50 von Rohbildern 49.t1 bis 49.tn erzeugt. Diese Rohbilder 49 sind zeitlich beabstandet und enthalten aufgrund des Einsatzes des SIM-Prinzipes Bildinformation mit höherer Auflösung, als sie das Mikroskop a priori bereitstellt. Unter Einsatz der Kumulantenfunktion 46 wird die Folge 50 nun in ein hochaufgelöstes Bild 51 umgerechnet. Dessen Auflösung ist höher als die Auflösung in den Rohbildern 49.

In einem zweiten Mikroskopieverfahren wird für jede Orientierung .o1 bis .o9 eine Folge 54 von Bildern 45 aufgenommen, so daß für jede Orientierung eine eigene Folge vorhanden ist. Jede Folge wird dann unter Einsatz der Kumulantenfunktion 46 in ein hochaufgelöstes Rohbild umgerechnet, so daß insgesamt ein Satz 54 von Rohbildern 53.o1 bis 53.o9 gegeben ist. Der Satz 54 enthält also Rohbilder 53 in den für das SIM-Prinzip erforderlichen unterschiedlichen Beleuchtungsstrukturen. Der Satz 54 aus Rohbildern wird dann unter Verwendung der Fourierfilterung 42 in ein hochaufgelöstes Bild 55 umgerechnet, dessen Ortsauflösung höher ist, als die jedes Rohbildes 53, deren Auflösung jeweils wieder höher ist, als es die Optik des Mikroskops 1 aufgrund der physikalischen Begrenzungen eigentlich zuläßt.

**Patentansprüche**

1. Mikroskopieverfahren zum Erzeugen eines hochaufgelösten Bildes (55) einer Probe (2) mit einer lateralen Auflösung jenseits der optischen Beugungsgrenze, wobei das Verfahren folgende Schritte aufweist:

a) die Probe (2) mit einem Marker versehen wird, der nach Anregung statistisch blinkend Lumineszenzstrahlung abgibt, oder eine Probe (2) verwendet wird, die nach Anregung lokal verteilt, statistisch blinkend Lumineszenzstrahlung abgibt, wobei die Marker jeweils für sich und unabhängig von benachbarten Markern ständig mit einer Blinkfrequenz zwischen zwei Lumineszenzstrahlungszuständen wechseln,

b) die Probe (2) durch strukturierte Beleuchtung zur Lumineszenz angeregt wird, wobei die Probe wiederholt in verschiedenen Beleuchtungszuständen (.o1-.o9) der strukturierten Beleuchtung beleuchtet wird,

c) die lumineszierende Probe (2) in jedem der unterschiedlichen Beleuchtungszustände wiederholt auf einen Detektor abgebildet wird, so daß für jeden der verschiedenen Beleuchtungszustände (.o1-.9) eine Bildfolge (44.o1-44.o9) erhalten wird,

d) aus jeder Bildfolge (44.o1-44.o9) mittels einer Kumulantenfunktion (46) gemäß dem SOFI-Mikroskopieverfahren, welche durch das Blinken verursachte Intensitätsfluktuationen in der Bildfolge auswertet, ein Rohbild, das eine über die optische Auflösung der Abbildung hinaus gesteigerte Ortsauflösung aufweist, erzeugt wird, so daß für jeden der unterschiedlichen Beleuchtungszustände (.o1-.o9) ein hochaufgelöstes Rohbild (53.o1-53.o9) erhalten wird, **dadurch gekennzeichnet, dass**, in Schritt c) die unterschiedlichen Beleuchtungszustände mindestens drei Drehlagen und pro Drehlage mindestens drei Verschiebelagen der strukturierten Beleuchtung sind und die strukturierte Beleuchtung mittels eines Gitters, eines variabel einstellbaren Streifenmodulators oder eines DMD's mit Frequenzen nahe der optisch übertragbaren Grenzfrequenz des Mikroskops erfolgt und

e) aus den erhaltenden Rohbildern (53.o1-53.o9) durch eine eine Fourierfilterung gemäß dem SIM-Mikroskopieverfahren umfassende rechnerische Bearbeitung (42) das hochaufgelöste Bild (55), das eine gegenüber den Rohbildern (53.o1-53.o9) gesteigerte Ortsauflösung aufweist, erzeugt wird.

2. Mikroskopieverfahren zum Erzeugen eines hochaufgelösten Bildes (51) einer Probe (2) mit einer lateralen Auflösung jenseits der optischen Beugungsgrenze, wobei das Verfahren folgende Schritte aufweist:

a) die Probe (2) mit einem Marker versehen wird, der nach Anregung statistisch blinkend Lumineszenzstrahlung abgibt, oder eine Probe (2) verwendet wird, die nach Anregung lokal verteilt, statistisch blinkend Lumineszenzstrahlung abgibt, wobei die Marker jeweils für sich und unabhängig von benachbarten Markern ständig mit einer Blinkfrequenz zwischen zwei Lumineszenzstrahlungszuständen wechseln,

b) die Probe (2) durch strukturierte Beleuchtung zur Lumineszenz angeregt wird, wobei die Probe wiederholt mit einem Satz verschiedener Beleuchtungszustände (.o1-.o9) der strukturierten Beleuchtung beleuchtet wird,

**dadurch gekennzeichnet, dass**

- die unterschiedlichen Beleuchtungszustände mindestens drei Drehlagen und pro Drehlage mindestens drei Verschiebelagen der strukturierten Beleuchtung sind;
- die strukturierte Beleuchtung entweder mittels eines Gitters, eines variabel einstellbaren Streifenmodulators oder eines DMD's mit Frequenzen nahe der optisch übertragbaren Grenzfrequenz des Mikroskops oder mittels unterschiedlicher Scan-Stellungen, die beim Abrastern der Probe (2) auftreten, erfolgt,

in folgenden Schritten

c) die lumineszierende Probe (2) in jedem Satz und dort in jedem der verschiedenen Beleuchtungszustände auf einen Detektor abgebildet wird, so daß eine Folge von Sätzen (39.t1-39.tn), die jeweils pro verschiedenem Beleuchtungszustand (.o1-.o9) ein Bild (40) umfassen, erhalten wird, wobei ein Marker oder eine Probe (2) verwendet wird, der/die blinkend Lumineszenzstrahlung mit einer mittleren Blinkrate abgibt und die Aufnahmedauer jedes Bildes so gewählt wird, daß die Zeitdauer zur Erzeugung eines Satzes (39.t1-39.tn) nicht größer ist als der Kehrwert der mittleren Blinkrate,

d) aus jedem Satz (39.t1-39.tn) durch eine eine Fourierfilterung gemäß dem SIM-Mikroskopieverfahren umfassende rechnerische Bearbeitung (42) ein Rohbild (49.t1-49.tn) mit über die optische Auflösung der Abbildung hinaus gesteigerter Ortsauflösung erzeugt wird, so daß eine Folge (50) von Rohbildern (49.t1-49.tn) erhalten wird und

e) aus der Folge (70) von Rohbildern (49.t1-49.tn) mittels einer Kumulantenfunktion (46) gemäß dem SOFI-Mikroskopieverfahren, welche durch das Blinken verursachte Intensitätsfluktuationen in der Folge (50) auswertet, das hochaufgelöste Bild (51), das eine gegenüber den Rohbildern (49.t1-49.tn) gesteigerte Ortsauflösung aufweist, erzeugt wird.

**3.** Verfahren nach Anspruch 2, wobei ein Marker oder eine Probe (2) verwendet wird, der/die blinkend Lumineszenzstrahlung mit einer mittleren Blinkrate abgibt und in Schritt c) die Aufnahmedauer jedes Bildes so gewählt wird, daß die Zeitdauer zur Erzeugung eines Satzes (39.t1-39.tn) nicht größer als der 1/10 des Kehrwerts der mittleren Blinkrate ist.

**4.** Verfahren nach Anspruch 1, 2 oder 3, wobei die Probe auf einen Pixel aufweisenden Flächendetektor abgebildet wird.

**5.** Mikroskop zum Erzeugen eines hochaufgelösten Bildes (55) einer Probe (2) mit einer lateralen Auflösung jenseits der optischen Beugungsgrenze, wobei die Probe (2) mit einem Marker versehen ist, der nach Anregung statistisch blinkend Lumineszenzstrahlung abgibt, oder einer Probe, die nach Anregung lokal verteilt, statistisch blinkend Lumineszenzstrahlung abgibt, wobei die Marker jeweils für sich und unabhängig von benachbarten Markern ständig mit einer Blinkfrequenz zwischen zwei Lumineszenzstrahlungszuständen wechseln und wobei das Mikroskop aufweist:

- einen Detektionsstrahlengang (8) und einen Beleuchtungsstrahlengang (16), wobei der Detektionsstrahlengang (8) die Probe (2) auf einen Detektor (6) abbildet und der Beleuchtungsstrahlengang (16) die Probe (2) mit durch strukturierte Beleuchtung zur Anregung von Lumineszenz beleuchtet, wobei der Beleuchtungsstrahlengang (16) eine Einrichtung zu Realisierung von verschiedenen Beleuchtungszuständen (.o1-.o9) aufweist,
- eine Rechen- und Steuereinrichtung (28), die das Mikroskop (1) so steuert, daß die Probe (2) wiederholt den verschiedenen Beleuchtungszuständen (.o1-.o9) der strukturierten Beleuchtung beleuchtet ist, die lumineszierende Probe in jedem der verschiedenen Beleuchtungszustände (.o1-.o9) wiederholt auf einen Detektor abgebildet ist, so daß für jeden der unterschiedlichen Beleuchtungszustände (.o1-.o9) eine Bildfolge (44.o1-44.o9) erhalten ist,
- die Rechen- und Steuereinrichtung (28) aus jeder Bildfolge (44.o1-44.o9) mittels einer Kumulantenfunktion (46) gemäß dem SOFI-Mikroskopieverfahren, welche durch das Blinken verursachte Intensitätsfluktuationen in der Bildfolge auswertet, ein Rohbild, das eine über die optische Auflösung der Abbildung hinaus gesteigerte Ortsauflösung aufweist, erzeugt, so daß für jeden der unterschiedlichen Beleuchtungszustände (.o1-.o9) ein hochaufgelöstes Rohbild (53.o1-53.o9) erhalten ist,

**dadurch gekennzeichnet, dass**

- die verschiedenen Beleuchtungszustände mindestens drei Drehlagen und pro Drehlage mindestens drei Verschiebelagen der strukturierten Beleuchtung sind und die strukturierte Beleuchtung mittels eines Gitters, eines variabel einstellbaren Streifenmodulators oder eines DMD's mit Frequenzen nahe der optisch übertragbaren Grenzfrequenz des Mikroskops erfolgt und
- die Rechen- und Steuereinrichtung (28) aus den erhaltenden Rohbildern (53.o1-53.o9) durch eine eine Fourierfilterung gemäß dem SIM-Mikroskopieverfahren umfassende rechnerische Bearbeitung (42) das hochaufgelöste Bild (55), das eine gegenüber den Einzelbildern (53.o1-53.o9) gesteigerte Ortsauflösung aufweist, erzeugt.

**6.** Mikroskop zum Erzeugen eines hochaufgelösten Bildes einer Probe (2) mit einer lateralen Auflösung jenseits der optischen Beugungsgrenze, wobei die Probe (2) mit einem Marker versehen ist, der nach Anregung statistisch blinkend Lumineszenzstrahlung abgibt, oder einer Probe, die nach Anregung lokal verteilt, statistisch blinkend Lumineszenzstrahlung abgibt, wobei die Marker jeweils für sich und unabhängig von benachbarten Markern ständig mit einer Blinkfrequenz zwischen zwei Lumineszenzstrahlungszuständen wechseln und wobei das Mikroskop aufweist:

- einen Detektionsstrahlengang (8) und einen Beleuchtungsstrahlengang (16), wobei der Detektionsstrahlengang (8) die Probe (2) auf einen Detektor (6) abbildet und der Beleuchtungsstrahlengang (16) die Probe (2) mit durch strukturierte Beleuchtung zur Anregung von Lumineszenz beleuchtet, wobei der Beleuchtungsstrahlengang (16) eine Einrichtung zu Realisierung von verschiedenen Beleuchtungszuständen (.o1-.o9) aufweist,

eine Rechen- und Steuereinrichtung (28), die das Mikroskop (1) so steuert, daß die Probe (2) wiederholt mit einem Satz von verschiedenen Beleuchtungszuständen (.o1-.o9) der strukturierten Beleuchtung beleuchtet ist, und die lumineszierende Probe in jedem Satz und dort in jedem der verschiedenen Beleuchtungszustände (.o1-.o9) auf einen Detektor (6) abgebildet ist, so daß eine Folge von Sätzen, die jeweils pro unterschiedlichem Beleuchtungszustand ein Bild umfassen, erhalten ist, **dadurch gekennzeichnet, dass**

- die unterschiedlichen Beleuchtungszustände mindestens drei Drehlagen und pro Drehlage mindestens drei Verschiebelagen der strukturierten Beleuchtung sind;

- die strukturierte Beleuchtung entweder mittels eines Gitters, eines variabel einstellbaren Streifenmodulators oder eines DMD's mit Frequenzen nahe der optisch übertragbaren Grenzfrequenz des Mikroskops oder mittels unterschiedlicher Scan-Stellungen, die beim Abrastern der Probe (2) auftreten, erfolgt,

- die Probe (2) oder deren Marker blinkend Lumineszenzstrahlung mit einer mittleren Blinkrate abgibt, und die Aufnahmedauer jedes Bildes so festgelegt ist, daß die Zeitdauer zur Erzeugung eines Satzes (39.t1-39.tn) nicht größer als der Kehrwerte der mittleren Blinkrate ist,

- die Rechen- und Steuereinrichtung (28) aus jedem Satz durch eine eine Fourierfilterung gemäß dem SIM-Mikroskopieverfahren umfassende rechnerische Bearbeitung (42) ein Rohbild (49.t1-49.t2) mit über die optische Auflösung der Abbildung hinaus gesteigerter Ortsauflösung erzeugt, so daß eine Folge (50) von Rohbildern (49.t1-49.tn) erhalten ist,

- die Rechen- und Steuereinrichtung (28) aus der Folge (50) von Rohbildern(49.t1-49.tn) mittels einer Kumulantenfunktion (46) gemäß dem SOFI-Mikroskopieverfahren, welche durch das Blinken verursachte Intensitätsfluktuationen in der Folge (50) auswertet, das hochaufgelöste Bild (55), das eine gegenüber den Rohbildern (49.t1-49.tn) gesteigerte Ortsauflösung aufweist, erzeugt.

**7.** Mikroskop nach Anspruch 6, wobei die Probe (2) oder deren Marker blinkend Lumineszenzstrahlung mit einer mittleren Blinkrate abgibt, und die Aufnahmedauer jedes Bildes so festgelegt ist, daß die Zeitdauer zur Erzeugung eines Satzes (39.t1-39.tn) nicht größer als 1/10 des Kehrwertes der mittleren Blinkrate ist.

**Claims**

**1.** Microscopy method for producing a high-resolution image (55) of a sample (2) with a lateral resolution above the optical diffraction limit, wherein the method comprises the following steps:

a) the sample (2) is provided with a marker which emits statistically flashing luminescence radiation after excitation, or use is made of a sample (2) which emits locally distributed, statistically flashing luminescence radiation after excitation, wherein the markers, on their own in each case and independently of adjacent markers, constantly change between two luminescence radiation states at a flash frequency,

b) the sample (2) is excited to luminescence by structured illumination, wherein the sample is repeatedly illuminated in different illumination states (.o1/.o9) of the structured illumination,

c) the luminescing sample (2) is repeatedly imaged onto a detector in each of the different illumination states such that an image sequence (44.o1-44.o9) is obtained for each of the different illumination states (.o1-.9),

d) a raw image which has a spatial resolution that was increased above the optical resolution of the image is produced from each image sequence (44.o1-44.o9) by means of a cumulant function (46) in accordance with the SOFI microscopy method, which evaluates intensity fluctuations in the image sequence caused by the flashes, such that a high-resolution raw image (53.o1-53.o9) is obtained for each of the different illumination states (.o1-.o9),

**characterized in that**,

in step c), the different illumination states are at least three rotational positions and, for each rotational position, at least three displacement positions of the structured illumination and the structured illumination is effectuated by means of a grating, a variably adjustable stripe modulator or a DMD with frequencies close to the optically transmissible limit frequency of the microscope, and

e) the high-resolution image (55) which has a spatial resolution that is increased in relation to the raw images (53.o1-53.o9) is produced from the obtained raw images (53.o1-53.o9) by computational processing (42) that comprises Fourier filtering in accordance with the SIM microscopy method.

**2.** Microscopy method for producing a high-resolution image (55) of a sample (2) with a lateral resolution above the optical diffraction limit, wherein the method comprises the following steps:

a) the sample (2) is provided with a marker which emits statistically flashing luminescence radiation after excitation, or use is made of a sample (2) which emits locally distributed, statistically flashing luminescence radiation after excitation, wherein the markers, on their own in each case and independently of adjacent markers, constantly change between two luminescence radiation states at a flash frequency,

b) the sample (2) is excited to luminescence by structured illumination, wherein the sample is repeatedly illuminated with a set of different illumination states (.o1-.o9) of the structured illumination,

**characterized in that**

- the different illumination states are at least three rotational positions and, for each rotational position, at least three displacement positions of the structured illumination;
- the structured illumination is brought about by means of a grating, a variably adjustable stripe modulator or a DMD with frequencies close to the optically transmissible limit frequency of the microscope or by means of different scanning positions that occur when scanning the sample (2),

in the following steps

c) the luminescing sample (2) is imaged on a detector in each set and, therein, in each of the different illumination states such that a sequence of sets (39.t1-39.tn), which each comprise an image (40) for each different illumination state (.o1-.o9), is obtained, wherein a marker or a sample (2) which emits flashing luminescence radiation with a mean flash rate is used and the recording duration of each image is selected in such a way that the time duration for producing a set (39.t1-39.tn) is no greater than the inverse of the mean flash rate,

d) a raw image (49.t1-49.tn) with a spatial resolution that has been increased above the optical resolution of the image is produced from each set (39.t1-39.tn) by computational processing (42) that comprises Fourier filtering in accordance with the SIM microscopy method such that a sequence (50) of raw images (49.t1-49.tn) is obtained and

e) the high-resolution image (51) which has an increased spatial resolution in relation to the raw images (49.t1-49.tn) is produced from the sequence (70) of raw images (49.t1-49.tn) by means of a cumulant function (46) in accordance with the SOFI microscopy method, which evaluates intensity fluctuations in the sequence (50) caused by the flashes.

3. Method according to Claim 2, wherein use is made of a marker or a sample (2) which emits flashing luminescence radiation with a mean flash rate and, in step c), the recording duration of each image is selected in such a way that the time duration for producing a set (39.t1-39.tn) is no greater than 1/10 of the inverse of the mean flash rate.

4. Method according to Claim 1, 2 or 3, wherein the sample is imaged on a flat-panel detector that comprises pixels.

5. Microscope for producing a high-resolution image (55) of a sample (2) with a lateral resolution above the optical diffraction limit, wherein the sample (2) is provided with a marker which emits statistically flashing luminescence radiation after excitation, or a sample which emits locally distributed, statistically flashing luminescence radiation after excitation, wherein the markers, on their own in each case and independently of adjacent markers, constantly change between two luminescence radiation states at a flash frequency and wherein the microscope comprises:

- a detection beam path (8) and an illumination beam path (16), wherein the detection beam path (8) images the sample (2) on a detector (6) and the illumination beam path (16) illuminates the sample (2) with structured illumination for the purposes of exciting luminescence, wherein the illumination beam path (16) comprises a device for realizing various illumination states (.o1-.o9),
- a computing and control device (28) which controls the microscope (1) in such a way that the sample (2) is repeatedly illuminated in the various illumination states (.o1-.o9) of the structured illumination, the luminescing sample being repeatedly imaged on a detector in each of the various illumination states (.o1-.o9) such that an image sequence (44.o1-44.o9) is obtained for each of the different illumination states (.o1-.o9),
- the computing and control unit (28) produces a raw image which has a spatial resolution that was increased above the optical resolution of the image from each image sequence (44.o1-44.o9) by means of a cumulant function (46) in accordance with the SOFI microscopy method, which evaluates intensity fluctuations in the image sequence caused by the flashes, such that a high-resolution raw image (53.o1-53.o9) is obtained for each of the different illumination states (.o1-.o9), **characterized in that**
- the different illumination states are at least three rotational positions and, for each rotational position, at least three displacement positions of the structured illumination and the structured illumination is effectuated by means of a grating, a variably adjustable stripe modulator or a DMD with frequencies close to the optically transmissible limit frequency of the microscope, and
- the computing and control device (28) produces the high-resolution image (55) which has a spatial resolution that is increased in relation to the individual images (53.o1-53.o9) from the obtained raw images (53.o1-53.o9) by computational processing (42) that comprises Fourier filtering in accordance with the SIM microscopy method.

6. Microscope for producing a high-resolution image of a sample (2) with a lateral resolution above the optical diffraction limit, wherein the sample (2) is provided with a marker which emits statistically flashing luminescence radiation after excitation, or a sample which emits locally distributed, statistically flashing luminescence radiation after excitation, wherein the markers, on their own in each case and independently of adjacent markers, constantly change between two luminescence radiation states at a flash frequency and wherein the microscope comprises:

- a detection beam path (8) and an illumination beam path (16), wherein the detection beam path (8) images the sample (2) on a detector (6) and the illumination beam path (16) illuminates the sample (2) with structured illumination for the purposes of exciting luminescence, wherein the illumination beam path (16) comprises a device for realizing various illumination states (.o1-.o9),

a computing and control device (28) which controls the microscope (1) in such a way that the sample (2) is repeatedly illuminated with a set of various illumination states (.o1-.o9) of the structured illumination, and the luminescing sample is imaged on a detector (6) in each set and, therein, in each of the different illumination states (.o1-.o9) such that a sequence of sets, which each comprise an image for each different illumination state, is obtained, **characterized in that**

- the different illumination states are at least three rotational positions and, for each rotational position, at least three displacement positions of the structured illumination;

- the structured illumination is brought about by means of a grating, a variably adjustable stripe modulator or a DMD with frequencies close to the optically transmissible limit frequency of the microscope or by means of different scanning positions that occur when scanning the sample (2),

- the sample (2) or the marker thereof emits flashing luminescence radiation with a mean flash rate and the recording duration of each image is set in such a way that the time duration for producing a set (39.t1-39.tn) is no greater than the inverse of the mean flash rate,

- the computing and control device (28) produces a raw image (49.tl-49.t2) with a spatial resolution that has been increased above the optical resolution of the image from each set by computational processing (42) that comprises Fourier filtering in accordance with the SIM microscopy method such that a sequence (50) of raw images (49.t1-49.tn) is obtained and

- the computing and control device (28) produces the high-resolution image (55) which has an increased spatial resolution in relation to the raw images (49.t1-49.tn) from the sequence (50) of raw images (49.t1-49.tn) by means of a cumulant function (46) in accordance with the SOFI microscopy method, which evaluates intensity fluctuations in the sequence (50) caused by the flashes.

7. Microscope according to Claim 6, wherein the sample (2) or the marker thereof emits flashing luminescence radiation with a mean flash rate and the recording duration of each image is set in such a way that the time duration for producing a set (39.t1-39.tn) is no greater than 1/10 of the inverse of the mean flash rate.

**Revendications**

1. Procédé de microscopie destiné à générer une image (55) à haute résolution d'un échantillon (2) avec une résolution latérale au-delà de la limite de diffraction optique, le procédé comprenant les étapes suivantes :

a) l'échantillon (2) est muni d'un marqueur qui, après excitation, délivre un rayonnement luminescent statistiquement clignotant, ou un échantillon (2) est utilisé qui, après excitation, délivre un rayonnement luminescent statistiquement clignotant distribué localement, les marqueurs basculant constamment entre deux états de rayonnement de luminescence à une fréquence de clignotement, respectivement pour soi et indépendamment des marqueurs voisins,

b) l'échantillon (2) est excité en luminescence par un éclairage structuré, l'échantillon étant éclairé de manière répétitive dans différents états d'éclairage (.o1-.o9) de l'éclairage structuré,

c) l'échantillon (2) luminescent, dans chacun des différents états d'éclairage, est représenté de manière répétitive sur un détecteur de sorte qu'une séquence d'images (44.o1-44.o9) soit obtenue pour chacun des différents états d'éclairage (.o1-.o9),

d) une image brute, laquelle possède une résolution spatiale augmentée par rapport à la résolution optique de la représentation, est générée à partir de chaque séquence d'images (44.o1-44.o9) au moyen d'une fonction cumulative (46) conformément au procédé de microscopie SOFI, lequel interprète les fluctuations de l'intensité provoquées dans la séquence d'images par le clignotement, de sorte qu'une image brute (53.o1-53.o9) à haute résolution soit obtenue pour chacun des différents états d'éclairage (.o1-.o9),

**caractérisé en ce que**

à l'étape c), les différents états d'éclairage sont au moins trois positions de rotation et, pour chaque position de rotation, au moins trois positions de décalage de l'éclairage structuré, et l'éclairage structuré est réalisé au moyen d'un réseau, d'un modulateur à ruban à réglage variable ou d'un DMD avec des fréquences proches de la fréquence limite pouvant être transmise par voie optique du microscope, et

e) à partir des images brutes (53.o1-53.o9) obtenues, une image (55) à haute résolution qui présente une résolution spatiale accrue par rapport aux images brutes (53.o1-53.o9) est générée par un traitement informatique (42) comprenant un filtrage de Fourier conformément au procédé de microscopie SIM.

2. Procédé de microscopie destiné à générer une image (55) à haute résolution d'un échantillon (2) avec une résolution latérale au-delà de la limite de diffraction optique, le procédé comprenant les étapes suivantes :

a) l'échantillon (2) est muni d'un marqueur qui, après excitation, délivre un rayonnement luminescent statistiquement clignotant, ou un échantillon (2) est utilisé qui, après excitation, délivre un rayonnement luminescent statistiquement clignotant distribué localement, les marqueurs basculant constamment entre deux états de rayonnement de luminescence à une fréquence de clignotement, respectivement pour soi et indépendamment des marqueurs voisins,
b) l'échantillon (2) est excité en luminescence par un éclairage structuré, l'échantillon étant éclairé de manière répétitive avec un jeu de différents états d'éclairage (.o1-.o9) de l'éclairage structuré, **caractérisé en ce que**

- les différents états d'éclairage sont au moins trois positions de rotation et, pour chaque position de rotation, au moins trois positions de décalage de l'éclairage structuré,
- l'éclairage structuré est réalisé au moyen d'un réseau, d'un modulateur à ruban à réglage variable ou d'un DMD avec des fréquences proches de la fréquence limite pouvant être transmise par voie optique du microscope ou au moyen de différentes positions de balayage qui se produisent lors du balayage de l'échantillon (2),

dans les étapes suivantes
c) l'échantillon (2) luminescent, dans chaque jeu et, là-bas, dans chacun des différents états d'éclairage, est représenté sur un détecteur de sorte qu'une séquence de jeux (39.t1-39.T9) soit obtenue, lesquels comprennent respectivement une image (40) pour chacun des différents états d'éclairage (.o1-.o9), un marqueur ou un échantillon (2) étant utilisé qui délivre un rayonnement luminescent clignotant avec une fréquence de clignotement moyenne et la durée d'enregistrement de chaque image étant choisie de telle sorte que la durée requise pour générer un jeu (39.t1-39.tn) ne soit pas supérieure à l'inverse de la fréquence de clignotement moyenne,
d) une image brute (49.t1-49.tn), laquelle possède une résolution spatiale augmentée par rapport à la résolution optique de la représentation, est générée à partir de chaque jeu (39.t1-39.tn) par un traitement informatique (42) comprenant un filtrage de Fourier conformément au procédé de microscopie SIM, de manière à obtenir une séquence d'images brutes (49.t1-49.tn) et
e) l'image (51) à haute résolution, qui présente une résolution spatiale accrue par rapport aux images brutes (49.t1-49.tn), est générée à partir de la séquence d'images brutes (49.t1-49.tn) au moyen d'une fonction cumulative (46) conformément au procédé de microscopie SOFI, lequel interprète les fluctuations de l'intensité provoquées dans la séquence (50) par le clignotement.

3. Procédé selon la revendication 2, un marqueur ou un échantillon (2) étant utilisé qui délivre un rayonnement luminescent clignotant avec une fréquence de clignotement moyenne et, à l'étape c), la durée d'enregistrement de chaque image est choisie de telle sorte que la durée requise pour générer un jeu (39.t1-39.tn) ne soit pas supérieure à 1/10 de l'inverse de la fréquence de clignotement moyenne.

4. Procédé selon la revendication 1, 2 ou 3, l'échantillon étant représenté sur un détecteur plan qui possède un pixel.

5. Microscope servant à générer une image (55) à haute résolution d'un échantillon (2) avec une résolution latérale au-delà de la limite de diffraction optique, l'échantillon (2) étant muni d'un marqueur qui, après excitation, délivre un rayonnement luminescent statistiquement clignotant, ou un échantillon qui, après excitation, délivre un rayonnement luminescent statistiquement clignotant distribué localement, les marqueurs basculant constamment entre deux états de rayonnement de luminescence à une fréquence de clignotement, respectivement pour soi et indépendamment des marqueurs voisins, et le microscope possédant :

- un trajet de rayon de détection (8) et un trajet de rayon d'éclairage (16), le trajet de rayon de détection (8) représentant l'échantillon (2) sur un détecteur (6) et le trajet de rayon d'éclairage (16) éclairant l'échantillon (2) par un éclairage structuré en vue d'une excitation en luminescence, le trajet de rayon d'éclairage (16) possédant un dispositif destiné à réaliser différents états d'éclairage (.o1-.o9),

- un dispositif de calcul et de commande (28) qui commande le microscope (1) de telle sorte que l'échantillon (2) soit éclairé de manière répétitive dans les différents états d'éclairage (.o1-.o9) de l'éclairage structuré, l'échantillon luminescent, dans chacun des différents états d'éclairage (.o1-.o9), est représenté de manière répétitive sur un détecteur de sorte qu'une séquence d'images (44.o1-44.o9) soit obtenue pour chacun des différents états d'éclairage (.o1-.o9),

- le dispositif de calcul et de commande (28) génère, à partir de chaque séquence d'images (44.o1-44.o9) au moyen d'une fonction cumulative (46) conformément au procédé de microscopie SOFI, lequel interprète les fluctuations de l'intensité provoquées dans la séquence d'images par le clignotement, une image brute qui possède une résolution spatiale augmentée par rapport à la résolution optique de la représentation, de sorte qu'une image brute (53.o1-53.o9) à haute résolution soit obtenue pour chacun des différents états d'éclairage (.o1-.o9), **caractérisé en ce que**

- les différents états d'éclairage sont au moins trois positions de rotation et, pour chaque position de rotation, au moins trois positions de décalage de l'éclairage structuré, et l'éclairage structuré est réalisé au moyen d'un réseau, d'un modulateur à ruban à réglage variable ou d'un DMD avec des fréquences proches de la fréquence limite pouvant être transmise par voie optique du microscope, et

- le dispositif de calcul et de commande (28) génère, à partir des images brutes (53.o1-53.o9) obtenues et par un traitement informatique (42) comprenant un filtrage de Fourier conformément au procédé de microscopie SIM, l'image (55) à haute résolution qui présente une résolution spatiale accrue par rapport aux images brutes (53.o1-53.o9).

6. Microscope servant à générer une image (55) à haute résolution d'un échantillon (2) avec une résolution latérale au-delà de la limite de diffraction optique, l'échantillon (2) étant muni d'un marqueur qui, après excitation, délivre un rayonnement luminescent statistiquement clignotant, ou un échantillon qui, après excitation, délivre un rayonnement luminescent statistiquement clignotant distribué localement, les marqueurs basculant constamment entre deux états de rayonnement de luminescence à une fréquence de clignotement, respectivement pour soi et indépendamment des marqueurs voisins, et le microscope possédant :

- un trajet de rayon de détection (8) et un trajet de rayon d'éclairage (16), le trajet de rayon de détection (8) représentant l'échantillon (2) sur un détecteur (6) et le trajet de rayon d'éclairage (16) éclairant l'échantillon (2) par un éclairage structuré en vue d'une excitation en luminescence, le trajet de rayon d'éclairage (16) possédant un dispositif destiné à réaliser différents états d'éclairage (.o1-.o9),

- un dispositif de calcul et de commande (28) qui commande le microscope (1) de telle sorte que l'échantillon (2) soit éclairé de manière répétitive avec un jeu de différents états d'éclairage (.o1-.o9) de l'éclairage structuré, et l'échantillon luminescent, dans chaque jeu et là-bas, dans chacun des différents états d'éclairage, est représenté sur un détecteur de sorte qu'une séquence de jeux (39.t1-39.T9) soit obtenue, lesquels comprennent respectivement une image (40) pour chacun des différents états d'éclairage **caractérisé en ce que**

- les différents états d'éclairage sont au moins trois positions de rotation et, pour chaque position de rotation, au moins trois positions de décalage de l'éclairage structuré,

- l'éclairage structuré est réalisé au moyen d'un réseau, d'un modulateur à ruban à réglage variable ou d'un DMD avec des fréquences proches de la fréquence limite pouvant être transmise par voie optique du microscope ou au moyen de différentes positions de balayage qui se produisent lors du balayage de l'échantillon (2),

- l'échantillon (2) ou son marqueur délivre un rayonnement luminescent clignotant avec une fréquence de clignotement moyenne et la durée d'enregistrement de chaque image est choisie de telle sorte que la durée requise pour générer un jeu (39.t1-39.tn) ne soit pas supérieure à l'inverse de la fréquence de clignotement moyenne,

- le dispositif de calcul et de commande (28) génère, à partir de chaque jeu (39.t1-39.tn) par un traitement informatique (42) comprenant un filtrage de Fourier conformément au procédé de microscopie SIM, une image brute (49.t1-49.tn) qui possède une résolution spatiale augmentée par rapport à la résolution optique de la représentation, de manière à obtenir une séquence (50) d'images brutes (49.t1-49.tn),

- le dispositif de calcul et de commande (28) génère l'image (51) à haute résolution, qui présente une résolution spatiale accrue par rapport aux images brutes (49.t1-49.tn), à partir de la séquence (50) d'images brutes (49.t1-49.tn) au moyen d'une fonction cumulative (46) conformément au procédé de microscopie SOFI, lequel interprète les fluctuations de l'intensité provoquées dans la séquence (50) par le clignotement.

7. Microscope selon la revendication 6, l'échantillon (2) ou son marqueur délivrant un rayonnement luminescent clignotant avec une fréquence de clignotement moyenne et la durée d'enregistrement de chaque image étant choisie de telle sorte que la durée requise pour générer un jeu (39.t1-39.tn) ne soit pas supérieure à 1/10 de l'inverse de la fréquence de clignotement moyenne.

Fig. 1

**Fig. 2**

**Fig. 3**

39.t1

39.t2

39.tn

40.o1

40.o1

40.o1

40.o9

40.o9

40.o9

42

42

42

48

49.t1

49.t2

•••

49.tn

50

46

51

**Fig. 4**

44.o1　　　44.o2　　　44.o9

45.t1　　　45.t1　　　45.t1

● ● ●

45.tn　46　　45.tn　46　　45.tn　46

52

53.o1　　　53.o2　　　53.o9

● ● ●

54

42

55

**Fig. 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1157297 B1
- DE 212009000043 U1
- WO 2010141068 A1
- DE 102008054317 A1
- DE 19908883 A1
- US 20080088920 A

### In der Beschreibung aufgeführte Nicht-Patentliteratur

- **C. MÜLLER ; J. ENDERLEIN.** Image scanning microscopy. *Physical Review Letters,* 2010, vol. 104, 198101
- **T. DERTINGER et al.** Fast, background-free, 3D super-resolution optical fluctuation imaging (SOFI). *PNAS,* 2009, 22287-22292
- Achieving increased resolution and more pixels with Superresolution Optical Fluctuation Imaging (SOFI). *Opt. Express,* 30. August 2010, vol. 18 (18), 18875-85
- **S. GEISSBUEHLER et al.** Comparison between SOFI and STORM. *Biomed. Opt. Express,* 2011, vol. 2, 408-420
- **M. GUSTAFSSON.** Nonlinear structured-illumination microscopy: wide-field fluorescence imaging with theoretically unlimited resolution. *Proc Natl Acad Sci USA,* 13. September 2005, vol. 102 (37), 13081-6
- **R. HEINTZMANN ; C. CREMER.** *Proc. SPIE Int. Soc. Opt. Eng.,* 1998, vol. 3568, 185-195